# EUROPEAN PATENT SPECIFICATION

(11) **EP 1 736 252 B1**
(45) Date of publication and mention of the grant of the patent: **30.01.2008**
(21) Application number: 05025370.7
(22) Date of filing: 21.11.2005
(51) Int. Cl.: B08B 3/02

(54) **Portable shower and washing apparatus**
Tragbare Vorrichtung zum Waschen und Duschen
Appareil portatif de lavage et de douche

(43) Date of publication of application: 27.12.2006
(73) Proprietor: Wu, Scott, Wu Feng Hsiang T'ai chung Hsien (TW)
(72) Inventor: Wu, Scott, Wu Feng Hsiang T'ai chung Hsien (TW)
(74) Representative: Viering, Jentschura & Partner

(56) References cited:
- DE-A1- 10 126 259
- GB-A- 2 273 040
- US-A- 3 652 044
- US-A- 4 925 105
- US-A- 6 158 669
- US-A1- 2005 006 400

## Description

### Background of Invention

### 1. Field of Invention

The present invention relates to a sprayer and, more particularly, to a portable direct-current sprayer.

### 2. Related Prior Art

US 2005/0006400 A1 discloses a portable backpack fluid dispenser operable to dispense fluid, comprising a tank defining a cavity in which fluid is supportable, a pump and a battery pack accommodated in a receptacle formed in the front surface of the tank, the receptacle being covered by a pump cover and an upright wall of the battery pack.

In US Patent No. 6158669, there is disclosed a portable misting device 100 including a housing 102 and a compartment 119 put in the housing 102. The compartment 119 is shut by means of a sidewall 137. A bracket 123 is secured to the sidewall 137 by means of screws. A battery 128 is put on the bracket 123. A filter 110 and a pump 114 are attached to a side of the bracket 123 while an accumulator 116 is attached to an opposite side of the bracket 123. A hose 108 is inserted through an orifice 141 defined in the sidewall 137. A switch 131 is put in an orifice 143 defined in the sidewall 137. A switch 170 is put in an orifice 145 defined in the sidewall 137. The misting device 100 can be used in various occasions.

Several problems have been encountered in the use of the portable misting device 100. For maintenance or repair, the sidewall 137 must be moved from the housing 102. However, carrying the filter 110, the pump 114 and the accumulator 116, the sidewall 137 is heavy, and it is hard to handle the sidewall 137. Moreover, the housing 102 is weak for not using any integrated element between two portions thereof between which the compartment 119 is defined.

The present invention is therefore intended to obviate or at least alleviate the problems encountered in prior art.

### Summary of Invention

According to the present invention, there is provided a portable direct-current sprayer comprising the features of claim 1. Further embodiments of the invention are described in the dependent claims.

An advantage of the sprayer according to the present invention is its strength. This is due to the use of the floor connecting the portions of the water chamber. When subject to the weight of the pump, or when subject to the pressure caused by the pump, the body will sustain its shape, thus minimizing the possibility of cracking and bursting.

Another advantage of the sprayer according to the present invention is its easy maintenance and repair. This is because the component chamber can be opened from the open sides

Other advantages and novel features of the present invention will become apparent from the following detailed description referring to the attached drawings.

### Brief Description of Drawings

The present invention will be described through detailed illustration of two embodiments referring to the drawings.

Fig. 1 is a perspective view of a portable direct-current sprayer according to the first embodiment of the present invention.

Fig. 2 is a perspective view of a hose and a cable connected to the portable direct-current sprayer shown in Fig. 1.

Fig. 3 is an exploded view of the sprayer shown in Fig. 2.

Fig. 4 is a front view of the sprayer shown in Fig. 1 from which a cover is detached in order to show a pump.

Fig. 5 is a cross-sectional view taken along a line A-A in Fig. 4.

Fig. 6 is a side view of a vehicle washed with water sprayed from the sprayer shown in Fig. 2.

Fig. 7 is an exploded view of a portable direct-current sprayer according to the second embodiment of the present invention.

### Detailed Description of Invention

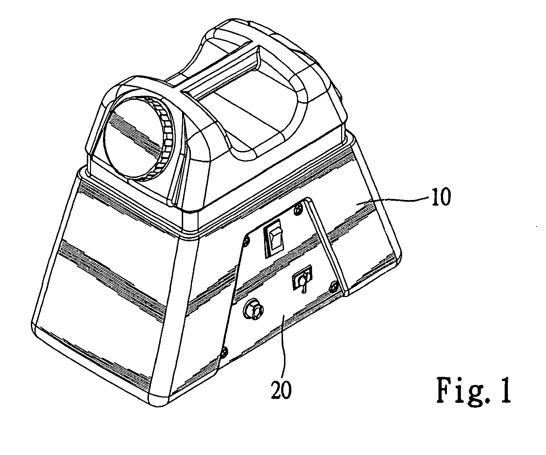

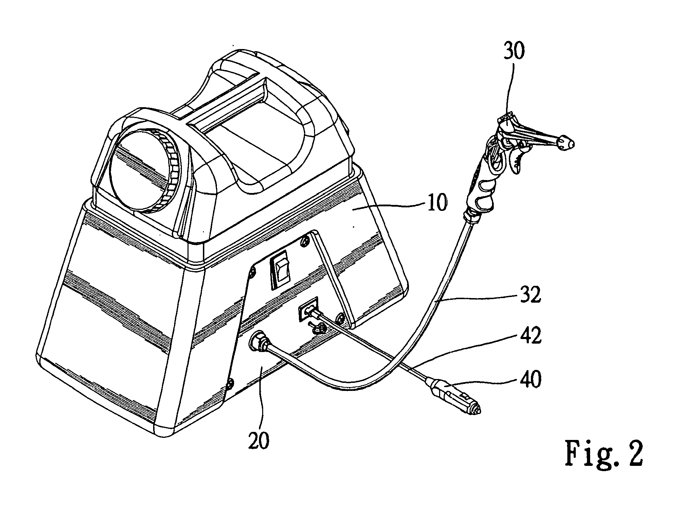

Referring to Figs. 1 and 2, there is shown a portable direct-current sprayer in accordance with a first embodiment of the present invention. The sprayer includes a body 10, a panel 20, a host 32 connected to the panel 20, a nozzle 30 connected to the host 32, a cable 42 connected to the panel 20 and a plug 40 connected to the cable 42.

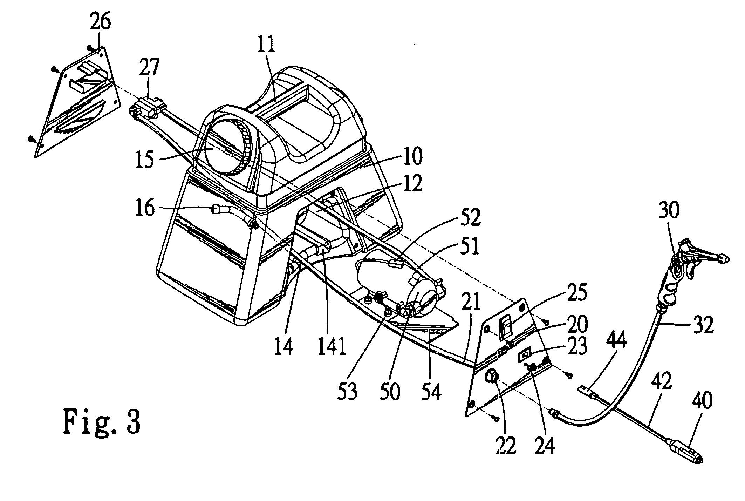

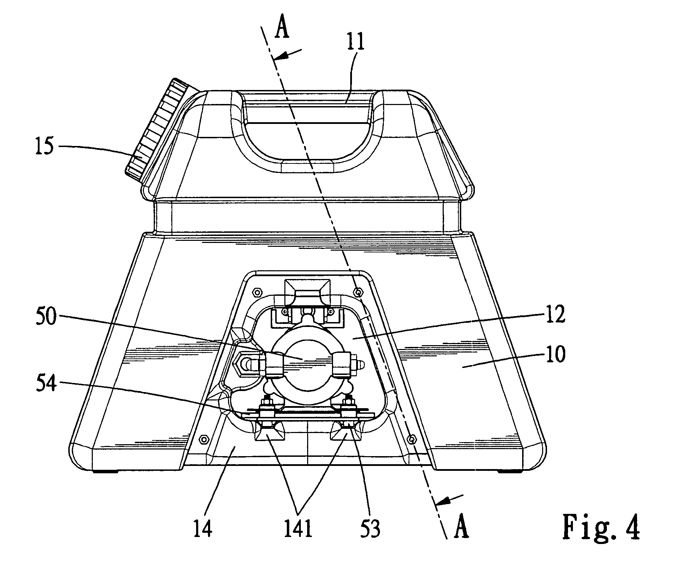

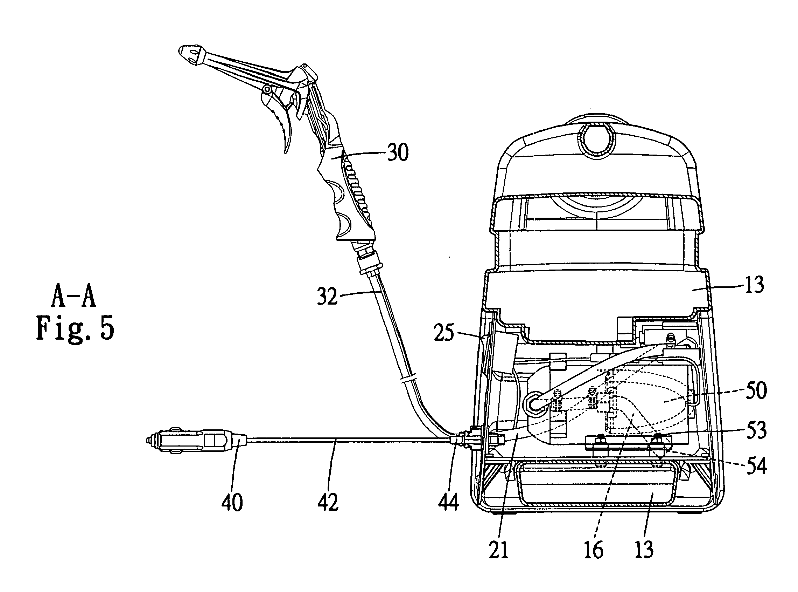

Referring to Figs. 3 through 5, the body 10 includes a handle 11 for facilitating the handling of the sprayer. The body 10 defines a water chamber 13 (Fig. 5). The water chamber 13 includes an opening (not shown) near the handle 11. Water can be fed into the water chamber 13 through the opening. The opening can be shut by means of a cap 15 so that the water can be kept in the water chamber 13.

The body 10 further defines a component chamber 12 separated from the water chamber 13 except an inter-chamber pipe 16 directed to the component chamber 12 from the water chamber 13. Water can be transmitted to the component chamber 12 from the water chamber 13 through the inter-chamber pipe 16. The component chamber 12 is positioned between two portions of the water chamber 13. The component chamber 12 includes two open sides.

Moreover, the body 10 includes an integrated floor 14 below the component chamber 12 between the portions of the water chamber 13. The integrated floor 14 enhances the rigidity of the body 10. Two grooves 141 are defined in the floor 14.

In the component chamber 12 is installed a pump 50 that consumes direct current, not alternate current, in order to pump water. The pump 50 includes an inlet pipe 51 and an outlet pipe 52. The inlet pipe 51 is connected to the inter-chamber pipe 16. Water can be transmitted to the pump 50 from the water chamber 13 through the inlet pipe 51 and the inter-chamber pipe 16. The outlet pipe 52 is connected to a pressure regulator 27 that regulates the pressure at which the pump 50 pumps water. The pump 50 is secured to a platform 54 by means of a plurality of fasteners 53. The fasteners 53 can slide in the grooves 141 so that the motor 50 on the platform 54 can slide smoothly into and from the component chamber 12.

On the panel 20 are installed a joint 22, a socket 23, a dummy plug 24 and a switch 25 connected electrically to the socket 23. The joint 22 is connected to the pressure regulator 27 through a pipe 21. The hose 32 can be connected to the joint 22. The wire 42 includes another plug 44 that can be plugged in the socket 23. The pump 50 can be turned on and off through operating the switch 25. When the sprayer is not in use, the plug 44 can be pulled from the socket 23. Instead, the dummy plug 24 can be plugged in the socket 23 for the security of the sprayer and the safety of users. The dummy plug 24 can be replaced with a lid for covering the socket 23. The panel 20 is secured to the body 11 by means of a plurality of fasteners (not numbered).

There is provided a cover 26 on which the pressure regulator 27 is installed. The cover 26 is secured to the body 10 by means of a plurality of fasteners (not numbered).

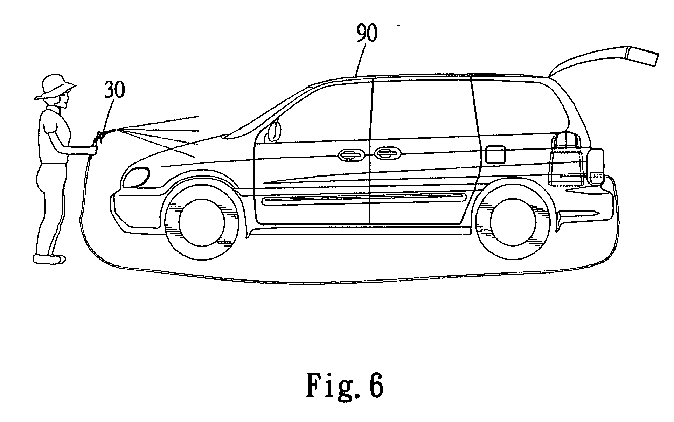

Referring to Fig. 6, a user washes a vehicle 90 with water sprayed from the nozzle 30. Although not shown, the plug 40 is plugged in a socket provided in the vehicle 90. After having a good time in the wild or on the beach, the user can have a shower with water sprayed from the nozzle 30. Thus, the user can keep the interior of the vehicle 90 clean.

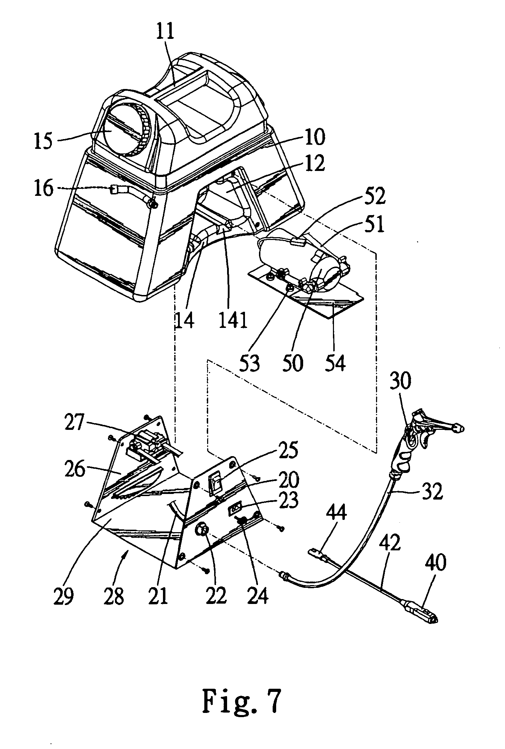

Referring to Fig. 7, there is shown a sprayer according to a second embodiment of the present invention. The second embodiment is like the first embodiment except using a covering device 28. The covering device 28 includes the panel 20, the cover 26 and a tray 29 formed between the panel 20 and the cover 26. The panel 20, the cover 26 and the tray 29 are integrated with one another.

The sprayer of the present invention exhibits several advantages.

Firstly, it is robust. This is due to the use of the floor 14 connecting the portions of the water chamber 13. When subject to the weight of the pump 50, or when subject to the pressure caused by the pump 50, the body 10 will sustain its shape, thus minimizing the possibility of cracking and bursting.

Secondly, its maintenance and repair are easy for at least two reasons. Firstly, the component chamber 12 can be opened from two sides thanks to the use of the panel 20 and the cover 26. Secondly, the pump 50 can easily moved from the component chamber 12 because the fasteners 53 below the platform 54 can slide smoothly in and along the grooves 141 in the floor 14.

The present invention has been described through the illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A portable direct-current sprayer comprising
a body (10) defining a water chamber (13) therein for containing water, a component chamber (12) positioned between two lateral portions of the water chamber (13),
a pump (50) installed in the component chamber (12) in order to pressurize the water from the water chamber (13);
a panel (20) for shutting one of two open sides of the component chamber (12); and
a cover (26) for shutting the other open side of the component chamber (12), **characterized by** the component chamber extending through the water chamber (13) and, having the open sides opposite to each other and an integrated floor (14) between the two lateral portions of the water chamber (13) and below the component chamber (12).

2. The sprayer according to claim 1 further comprising a tray (29) formed between the panel (20) and the cover (26), thus integrating the panel (20), the cover (26) and the tray (29) with one another.

3. The sprayer according to claim 1 or 2 further comprising a platform (54) for carrying the pump (50) on the floor (14) in a sliding manner.

4. The sprayer according to claim 3 further comprising a plurality of fasteners (53) for securing the pump (50) to the platform (54), wherein the floor (14) defines two grooves (141) in and along which the fasteners (53) can slide.

5. The sprayer according to claim 1 or 2 wherein the body (10) comprises a handle (11) for facilitating the handling of the body (10).

6. The sprayer according to claim 1 or 2 further comprising a cap (15) for shutting an opening of the water chamber (13).

7. The sprayer according to claim 1 or 2 wherein the panel (20) comprises a joint (22) to which a hose (32) can be connected.

8. The sprayer according to claim 1 or 2 wherein the panel (20) comprises a socket (23) in which a plug (44) of a cable (42) can be plugged.

9. The sprayer according to claim 8 wherein the panel (20) further comprises a dummy plug (24) that can be plugged in the socket (23) when the sprayer is not in use.

10. The sprayer according to claim 1 or 2 wherein the panel (20) further comprises a switch (25) operable to turn on and off the pump (50).

11. The sprayer according to claim 1 or 2 further comprising a pressure regulator (27) connected to the pump (50) in order to regulate the pressure at which the water is pressurized.

## Patentansprüche

1. Tragbarer Gleichstrom-Sprüher aufweisend:
einen Körper (10), der darin eine Wasserkammer (13) zum Enthalten von Wasser definiert, eine Komponentenkammer (12), angeordnet zwischen zwei seitlichen Abschnitten der Wasserkammer (13),
eine Pumpe (50), eingebaut in der Komponentenkammer (12) zum Unter-Druck-Setzen des Wassers aus der Wasserkammer (13),
ein Paneel (20) zum Schließen einer von zwei offenen Seiten der Komponentenkammer (12), und
eine Abdeckung (26) zum Schließen der anderen offenen Seite der Komponentenkammer (12), **dadurch gekennzeichnet, dass** sich die Komponentenkammer durch die Wasserkammer (13) erstreckt und die offenen Seiten einander gegenüber angeordnet hat und dass ein integrierter Boden (14) zwischen den beiden seitlichen Abschnitten der Wasserkammer (13) und unter der Komponentenkammer (12) vorliegt.

2. Sprüher gemäß Anspruch 1, ferner einen Einsatz (29) aufweisend, der zwischen dem Paneel (20) und der Abdeckung (26) gebildet ist, wodurch das Paneel (20), die Abdeckung (26) und der Einsatz (29) miteinander integriert sind.

3. Sprüher gemäß Anspruch 1 oder 2, ferner eine Plattform (54) zum gleitenden Tragen der Pumpe (50) auf dem Boden (14) aufweisend.

4. Sprüher gemäß Anspruch 3, ferner eine Mehrzahl von Befestigungen (53) zum Befestigen der Pumpe (50) an der Plattform (54) aufweisend, wobei der Boden (14) zwei Nuten (141) definiert, in und entlang denen die Befestigungen (53) gleiten können.

5. Sprüher gemäß Anspruch 1 oder 2, wobei der Körper (10) einen Griff (11) zum Erleichtern des Bedienens des Körpers (10) aufweist.

6. Sprüher gemäß Anspruch 1 oder 2, ferner eine Kappe (15) zum Schließen einer Öffnung der Wasserkammer (13) aufweisend.

7. Sprüher gemäß Anspruch 1 oder 2, wobei das Paneel (20) ein Anschlussstück (22) aufweist, an welchem ein Schlauch (32) angeschlossen werden kann.

8. Sprüher gemäß Anspruch 1 oder 2, wobei das Paneel (20) eine Anschlussdose (23) aufweist, in welche ein Stecker (44) eines Kabels (42) gesteckt werden kann.

9. Sprüher gemäß Anspruch 8, wobei das Paneel (20) ferner einen Blindstecker (24) aufweist, der in die Anschlussdose (23) gesteckt werden kann, wenn der Sprüher nicht verwendet wird.

10. Sprüher gemäß Anspruch 1 oder 2, wobei das Paneel (20) ferner einen Schalter (25) aufweist, der bedienbar ist zum Anschalten oder Abschalten der Pumpe (50).

11. Sprüher gemäß Anspruch 1 oder 2, ferner einen Druckregler (27) aufweisend, der zum Regulieren des Drucks, bei dem das Wasser unter Druck gesetzt wird, mit der Pumpe (50) verbunden ist.

## Revendications

1. Pulvérisateur portable à courant continu comprenant :
un corps (10) définissant une chambre d'eau (13) à l'intérieur de celui-ci pour contenir de l'eau, une chambre de composant (12) positionnée entre deux parties latérales de la chambre d'eau (13),
une pompe (50) installée dans la chambre de composant (12) afin de mettre l'eau sous pression provenant de la chambre d'eau (13) ;
un panneau (20) pour fermer l'un des deux côtés ouverts de la chambre de composant (12) ; et
un couvercle (26) pour fermer l'autre côté ouvert de la chambre de composant (12), **caractérisé en ce que** la chambre de composant s'étend à travers la chambre d'eau (13) et a les côtés ouverts opposés l'un à l'autre, et un plancher intégré (14) entre les deux parties latérales de la chambre d'eau (13) et au-dessous de la chambre de composant (12).

2. Pulvérisateur selon la revendication 1, comprenant en outre un plateau (29) formé entre le panneau (20) et le couvercle (26), intégrant ainsi le panneau (20), le couvercle (26) et le plateau (29) les uns par rapport aux autres.

3. Pulvérisateur selon la revendication 1 ou 2, comprenant en outre une plate-forme (54) pour supporter la pompe (50) sur le plancher (14) d'une manière coulissante.

4. Pulvérisateur selon la revendication 3, comprenant en outre une pluralité de fixations (53) pour fixer la pompe (50) à la plate-forme (54), dans lequel le plancher (14) définit deux rainures (141) dans et le long desquelles les fixations (53) peuvent coulisser.

5. Pulvérisateur selon la revendication 1 ou 2, dans lequel le corps (10) comprend une poignée (11) pour faciliter la manipulation du corps (10).

6. Pulvérisateur selon la revendication 1 ou 2, comprenant en outre un capuchon (15) pour fermer une ouverture de la chambre d'eau (13).

7. Pulvérisateur selon la revendication 1 ou 2, dans lequel le panneau (20) comprend un joint (22) auquel un tuyau flexible (32) peut être raccordé.

8. Pulvérisateur selon la revendication 1 ou 2, dans lequel le panneau (20) comprend une prise (23) dans laquelle une fiche (44) d'un câble (42) peut être branchée.

9. Pulvérisateur selon la revendication 8, dans lequel le panneau (20) comprend en outre une fiche isolante (24) qui peut être branchée dans la prise (23) lorsque le pulvérisateur n'est pas utilisé.

10. Pulvérisateur selon la revendication 1 ou 2, dans lequel le panneau (20) comprend en outre un interrupteur (25) pouvant être actionné pour mettre en marche et arrêter la pompe (50).

11. Pulvérisateur selon la revendication 1 ou 2, comprenant en outre un régulateur de pression (27) raccordé à la pompe (50) afin de réguler la pression à laquelle l'eau est mise sous pression.
